# EUROPEAN PATENT SPECIFICATION

(11) **EP 2 708 140 B1**
(45) Date of publication and mention of the grant of the patent: **29.04.2015**
(21) Application number: 12184221.5
(22) Date of filing: 13.09.2012
(51) Int. Cl.: A23G 9/04, A23G 9/16, A23G 9/22

(54) **A method for producing ice cream roll-ups and an ice cream roll-up**
Verfahren zur Herstellung von Eiscremerolle und Eiscremerolle
Procédé de production d'enroulages de crème glacée et enroulages de crème glacée

(43) Date of publication of application: 19.03.2014
(73) Proprietor: FF Marka Wlasna Sp. z o.o., 90-105 Lodz (PL)
(72) Inventor: Balcerzak, Irena, 95-082 Chechlo Pierwsze (PL); Witon, Malgorzata, 01-481 Warszawa (PL)
(74) Representative: Pawlowski, Adam

(56) References cited:
- EP-A1- 1 709 875
- AU-B2- 718 393
- US-A- 4 044 161
- US-A- 6 103 287
- US-A1- 2009 136 635

## Description

The present invention relates to a method for producing ice cream roll-ups.

A significant property of ice creams is their resistance to temperature changes during storage and transport. Appropriate procedures allow to guarantee stable, low temperature of ice cream during warehousing by producers, transport to wholesale warehouse storage at wholesaler's and transport to retail points. However, during their storage at a retail point, ice cream may be subject to thermal shocks, resulting for example from a power shortage of refrigerators, refrigerator door left open or transportation from a sale point to a consumer in packaging which is not thermally protected. Thermal shocks may result in a loss of ice cream aeration and generation of water crystals, which deteriorate their organoleptic properties for a consumer. This is especially important in case of ice cream roll-ups, wherein a consumer may easily detect a change of properties of various roll-up layers.

In a typical production process for ice cream, made of sugar, powdered milk, glucose syrup, liquid vegetable oil, powdered whey, stabilizer and water, an ice cream mixture or several mixtures are prepared, which are subsequently submitted to homogenisation, pasteurisation, cooling, maturing and initial freezing with aeration, wherein afterward an initially frozen mixture is formed into a final product that is hardened in a hardening tunnel.

In order to make ice cream resistant to thermal shocks, stabilizers are added to the ice cream mixture, which allow for maintaining ice cream texture when temperature increases above -18°C during distribution. In typical production methods, the ice cream mixture is initially frozen to a temperature from a range of - 3°C to -6°C, whereas the mixture is aerated from 100% to 130% thereby arriving at appropriate fluffiness. Subsequently the prepared mixture is hardened in a hardening tunnel to an average temperature of -18°C, which means that the required temperature is gained only in external layers whereas the temperature in the internal layers of the ice cream is higher that -18°C. Lowering the temperature below -18°C in the whole product mass is achieved only at the stage of warehousing in a temperature close to -25°C. However, the time required to achieve the required temperature in the whole volume of ice cream in all layers of a storage stack is close to 30 hours. Such long time of freezing disadvantageously influences the structure of a complete product because slowly freezing water has a tendency to create large crystals, which does not provide for sufficient smoothness, creaminess and resistance to multiple thermal shocks.

Typical processes of manufacturing ice cream, wherein ice cream hardening is conducted as a single-stage process, are disclosed in the following patent documents: EP1709875 (hardening at temperatures range -20°C to -40°C), US2009136635 (hardening at temperatures range -25°C to -40°C), US4044161 (hardening at temperatures range -40°C to -40°C). Another single-stage hardening process is disclosed in US6103287 wherein cryogenic temperature (i.e. below-195°C) is used to harden ice cream.

It is the aim of the present invention to provide a method for producing ice cream roll-ups having high level of smoothness and creaminess, providing for their resistance to multiple thermal shocks.

The object of the present invention is a method for producing ice cream roll-ups, in which a mixture is obtained from sugar, powdered milk, glucose syrup, liquid coconut fat, powdered whey, stabilizer and water, in order to create roll-up layers, which are consecutively subject to homogenisation, pasteurisation, cooling, maturing and initial freezing with aeration followed by an initially frozen mixture being formed into a final product that is hardened an placed in a cooling chamber, characterized in that the ice cream roll-up is hardened in a first hardening tunnel in an atmosphere having a temperature from -55°C to -65°C in order to achieve temperature not higher than -18°C in an outer layer constituting at least 25% of ice cream volume, subsequently the ice cream roll-up is hardened in a second hardening tunnel in an atmosphere having a temperature from -40°C to -42°C in order to achieve temperature not higher than -18°C in the total volume of the ice cream roll-up.

The object of the present disclosure is also an ice cream roll-up, the layers of which are produced from mixtures of sugar, powdered milk, glucose syrup, liquid coconut fat, powdered whey, stabilizer and water, that are consecutively subject to homogenisation, pasteurisation, cooling, maturing and initial freezing with aeration, characterized in that the formed ice cream roll-up is hardened in a first hardening tunnel in an atmosphere having a temperature from -55°C to -65°C in order to achieve temperature not higher than -18°C in an outer layer constituting at least 25% of ice cream volume, subsequently the ice cream roll-up is hardened in a second hardening tunnel in an atmosphere having a temperature from -40°C to - 42°C in order to achieve temperature not higher than -18°C in the total volume of the ice cream roll-up.

The advantage of method for production of ice cream roll-ups according to the present invention is that owing to two-stage hardening process one can achieve ice cream of high smoothness, creaminess and resistance to multiple thermal shocks.

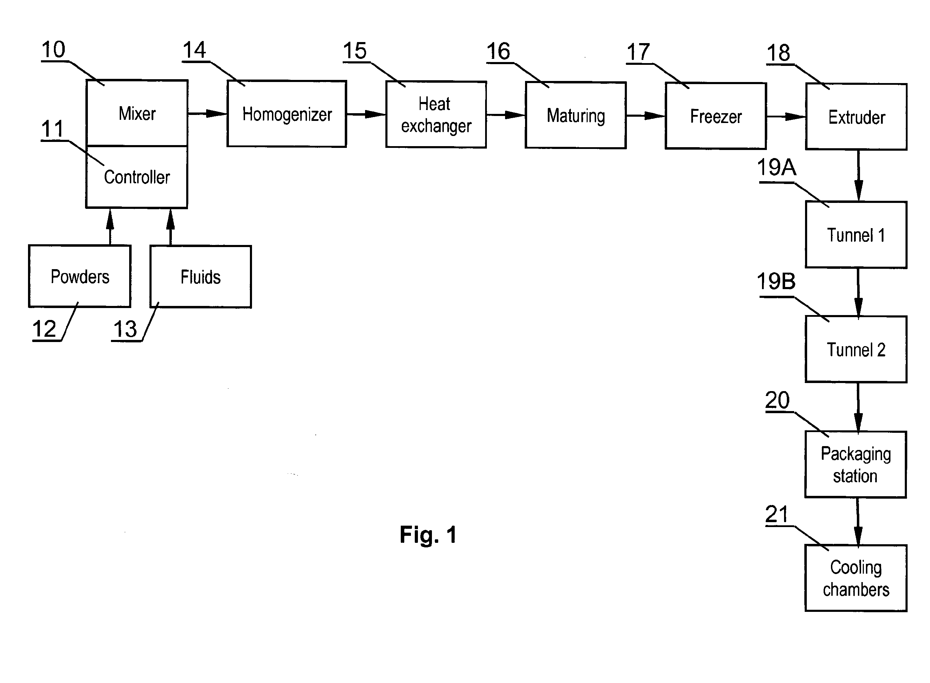

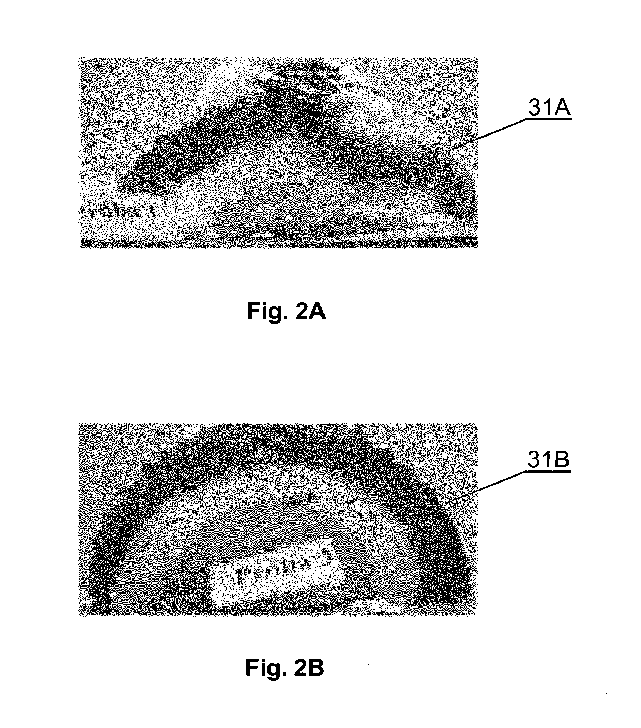

The object of the present invention has been depicted, in exemplary embodiments, on a drawing in which Fig. 1 presents a diagram of production line for producing ice cream according to the method of the present invention, Fig. 2A and 2B depicts test results of shape change.

The method for production of ice cream roll-ups according to the present invention may be executed by means of a production line shown in Fig. 1. To a mixer 10, by means of controlling devices, commonly identified as a controller 11, there are dosed, from containers of loose ingredients 12, ingredients such as sugar, powdered milk, powdered whey, protein concentrate, stabilizers and from containers of liquid ingredients 13 there are dosed ingredients such as water, glucose syrup, liquid fat. The controller 11 is responsible for ingredients dosing in a set order and amount. The complete time of mixing depends on used ingredients and the mixing is executed until the moment of precise mixing of the loose ingredients. In the method according to the present invention the following mixture recipe has been used:
Sugar: from 12% to 14% by weight of the total mass
Glucose syrup 45: from 2,5% to 7% by weight of the total mass
Liquid coconut fat: from 4,8% to 8% by weight of the total mass
Powdered whey: from 2,5% to 6,5% by weight of the total mass
Protein concentrate: from 0% to 3% by weight of the total mass
Powdered skimmed milk: from 2% to 7% by weight of the total mass
Food colorants, flavors: from 0,05% to 0,5% by weight of the total mass
Stabilizers: from 0,5% to 0,6% by weight of the total mass
Water: the remaining weight up to 100% by weight of the total mass

The stabilizer used for the mixture is a mixture of mono- and diglycerides in the amount of 55% to 60% by weight of the stabilizer and hydrocoloidal substances in the amount of 40% to 45% by weight of the stabilizer, whereas as a hydrocoloidal substance there is used guar gum in the amount of 22% to 25% by weight of the stabilizer and carob bean gum in the amount of 15% to 18% by weight of the stabilizer. Mono- and diglycerides are used as emulsifiers to emulsify fat, improving the pyrolysis of fat particles and binding with other ingredients, mainly proteins. Guar gum and carob bean gum, on the other hand, are the main stabilizers influencing the changes occurring in air bubbles, preventing their decomposition or binding. Decomposition or binding of air bubbles results in loss of ice cream volume in the course of temperature fluctuations during distribution.

In the mixer 10 there may be prepared several different ice cream mixtures constituting separate layers of a roll-up, which may subsequently be processed by separate lines comprising stands 14 - 18.

The ice cream mixture prepared in the mixer 10 is supplied to homogeniser 14 in which homogenisation of the mixture is performed by mixing water molecules with fat molecules and intensification of emulsifier operation. For the above mixture, homogenisation is conducted under the pressure of 14-17 MPa. Next, the mixture is submitted to pasteurisation in the heat exchanger 15 in order to eliminate or at least reduce the amount of microbes in the product, deactivate enzymes causing undesirable changes and precise mixing of the ingredients. Pasteurisation is performed at the temperature of 80°C do 90°C during 2s to 30s (VHT Pasteurisation, VHT - Very High Temperature). Afterward, the mixture is cooled in the same heat exchanber to the temperature of 3°C to 6°C. The cooled mixture is placed in maturing tank 16, which constitutes a tank with a mixer and performs the process of maturing with mixing under the temperature of 3°C do 6°C during 2 to 4 hours. During maturing the viscosity of the mixture increases as a result of protein expansion and gelation of the stabiliser. At this stage additional ingredients can be added, such as flavors, food colorants and/or fruit pulps. Mature ice cream mixture is pushed to the freezer 17, in which it is frozen to the temperature of -4.5°C to -5.5°C and aerated from 100% to 130% of the mixture volume before aeration, which makes it smooth, soft and fluffy. The freezer 17, that is the device for preliminary freezing of ice cream, has the form of a horizontal cylinder with double walls, between which a cooling agent is applied, with a rotating shaft inside. The mixture freezes on the walls of the cylinder and then it is scraped from it. The cylinder is supplied with air which, in effect of constant mixing, aerifies the mixture. After freezing, the mixture has a semi-dense consistency. During this process, there is frozen about 40% of water comprised in the mixture.

Subsequently, by means of an extruder 18, the frozen mixtures are formed into a roll-up. Ina further step, the roll-up is subject to two-stage hardening. At the first stage the mixture is hardened in a first hardening tunnel 19A in an atmosphere of temperature from -55°C to -65°C for about 10 minutes up to gaining temperature not higher than -18°C in the outer layers of the ice cream, meaning layers constituting approximately 25% by volume of the ice cream counting from the outside. At the second stage the mixture is hardened in a second hardening tunnel 19B in an atmosphere of temperature from -40°C to -42°C for about 60 minutes up to gaining temperature not higher than -18°C in the whole volume of the roll-up.

The products after freezing are packed on an automatic packaging stand 20 into single and collective packages.

The second hardening tunnel 19B may also be used for production of ice creams such as desserts, ice cream in cups, ice cream in buckets.

The frozen and packed ice creams are warehoused in cooling chambers 21, in which they are stored in a temperature of approximately -25°C and are ready to be put on the retail market.

An ice cream roll-up produced using the above described method, from a mixture of described recipe is characterized by great smoothness, creaminess and resistance to multiple thermal shocks as described below.

During the test there have been compared an ice cream roll-up of 1 liter volume obtained from a typical technique use A and an ice cream roll-up obtained I line with the present invention, identified as technique B.

In the first process, a mixture formed to a final product has been hardened in a standard hardening tunnel in an atmosphere of temperature from -55°C to - 65°C, wherein after exiting the tunnel the ice cream had, in their outer layers, a temperature of -18,5 degrees Celsius and in the central part a temperature of - 10°C.

In the second process, a mixture formed to a final product has been subjected to a two-stage hardening, in which at the first stage the mixture has been hardened in the first hardening tunnel in an atmosphere of temperature from -55°C to -65°C for 10 minutes up to gaining temperature of -18°C in the outer layers of the ice cream and subsequently at the second stage the mixture has been hardened in a second hardening tunnel in an air atmosphere of temperature from -40°C to -42°C for 60 minutes. After exiting the tunnel the ice cream had a temperature of -19°C in the whole volume.

The content of respective substances being ingredients of both mixtures and the remaining parameters of each technological stage have been identical.

Ingredients of the mixture:
Sugar: 12% by weight of the total mass
Glucose syrup 45: 7% by weight of the total mass
Liquid coconut fat: 8% by weight of the total mass
Powdered whey: 2,5% by weight of the total mass
Powdered skimmed milk: 7% by weight of the total mass
Stabilizer: 0,5% of weight of the total mass
Water: the remaining weight up to 100% of weight of the total mass

The tested packaged products have been placed in a cooling chamber having internal temperature of -25°C for 48 hours. Next, they were put into a refrigerator having internal temperature of -19°C and being placed in a room with temperature of 22°C. Thereafter there have been run ten following cycles:
- moving the ice cream for 1 hour outside the refrigerator into room temperature that was 22°C;
- moving the ice cream for 4 hours inside the refrigerator to temperature - 19°C;
- moving the ice cream for 1 hour outside the refrigerator into room temperature that was 22°C;
- moving the ice cream for 20 hours inside the refrigerator to temperature - 19°C.

Next the roll-ups have been placed without packaging onto a mesh in a room having temperature of 20°C whereas subsequently a test of first drop has been run, a test of change of shape and a measurement of efflux.

In the first drop test there has been measured time, after which a first drop of melting ice cream efflux fell beneath the mesh. In the measurement of efflux there has been tested an amount of efflux after 60, 90 and 120 minutes. The results of shape change of ice cream after 120 minutes have been presented in Fig. 2A and 2B for techniques A and B respectively. The table below presents results of remaining tests for ice cream produced using A and B techniques:

| Name | Technique A | Technique B |
|---|---|---|
| First drop after [min] | 28 | 62 |
| Efflux amount [ml] after 60 min | 4,4 | 0 |
| Efflux amount [ml] after 90 min | 19,6 | 1,9 |
| Efflux amount [ml] after 120min | 35,5 | 10 |

It can be readily seen that the product produced using technique B is subject to significantly slower melting and deformations that the product produced using technique A. As can be seen in fig. 2A the edges 31A of the roll-up produced according to technique A are melted whereas as can be seen in Fig. 2B the edges 31 B of the roll-up produced according to technique B are relatively in line with edged of the roll-up before measurement.

Additionally, based on first drop tests results and amount of efflux, there has to be noticed that the product produced according to technique B with a use of two-stage hardening, namely the hardening according to the present invention, is more resistant to thermal shocks in comparison to the product manufactured according to technique A using a single stage hardening and is characterized by greater creaminess and smoothness.

## Claims

1. A method for producing of ice cream roll-ups, in which a mixture is obtained from sugar, powdered milk, glucose syrup, liquid coconut fat, powdered whey, stabiliser and water, in order to create roll-up layers, which are consecutively subject to homogenisation, pasteurisation, cooling, maturing and initial freezing with aeration followed by an initially frozen mixture being formed into a final product that is hardened and placed in a cooling chamber, **characterized in that** the ice cream roll-up is hardened in a first hardening tunnel in an atmosphere having a temperature from -55°C to -65°C in order to achieve a temperature not higher than -18°C in an outer layer constituting at least 25% of ice cream volume, and subsequently the ice cream roll-up is hardened in a second hardening tunnel in an atmosphere having a temperature from -40°C to -42°C in order to achieve temperature not higher than -18°C in the total volume of the ice cream roll-up.

## Patentansprüche

1. Verfahren zur Herstellung von Eiscremerollen, wobei aus Zucker, Milchpulver, Glucosesirup, flüssigem Kokosfett, Weizenpulver, Stabilisator und Wasser eine Mischung erhalten wird, um Rolllagen zu erzeugen, die nacheinander Homogenisierung, Pasteurisierung, Kühlung, Reifung und erstem Einfrieren mit Belüftung ausgesetzt wird, gefolgt davon, dass die erstmals eingefrorene Mischung zu einem Endprodukt geformt wird, das gehärtet und in einer Kühlkammer platziert wird, **dadurch gekennzeichnet, dass** die Eiscremerolle in einem ersten Härtetunnel in einer Atmosphäre mit einer Temperatur zwischen -55 °C und -65 °C gehärtet wird, um in einer Außenschicht, die wenigstens 25% des Eiscremevolumens ausmacht, eine Temperatur von nicht mehr als -18 °C zu erreichen, und wobei die Eiscremerolle danach in einem zweiten Härtetunnel in einer Atmosphäre mit einer Temperatur zwischen -40°C und -42 °C gehärtet wird, so dass in dem Gesamtvolumen der Eiscremerolle eine Temperatur von nicht mehr als -18 °C erreicht wird.

## Revendications

1. Procédé de production d'enroulages de crème glacée, un mélange étant obtenu à partir de sucre, lait en poudre, sirop de glucose, graisse de noix de coco liquide, lactosérum en poudre, stabilisateur et eau, afin de créer des couches enroulées, qui sont consécutivement soumises à homogénéisation, pasteurisation, refroidissement, maturation et congélation initiale avec aération suivie par la formation d'un mélange initialement congelé en un produit final qui est durci et placé dans une chambre de refroidissement, **caractérisé en ce que** l'enroulage de crème glacée est durci dans un premier tunnel de durcissement dans une atmosphère ayant une température de -55 à -65 °C afin d'atteindre une température inférieure ou égale à -18 °C dans une couche externe constituant au moins 25 % du volume de crème glacée, et subséquemment l'enroulage de crème glacée est durci dans un second tunnel de durcissement dans une atmosphère ayant une température de -40 à -42 °C afin d'atteindre une température inférieure ou égale à -18 °C dans le volume total de l'enroulage de crème glacée.
